# EUROPEAN PATENT APPLICATION

(11) **EP 4 345 990 A1**
(43) Date of publication of application: **03.04.2024**
(21) Application number: 22938145.4
(22) Date of filing: 22.07.2022
(51) Int. Cl.: H01M 50/103

(54) **BATTERY SHELL AND BATTERY**

(30) Priority: 22.04.2022 CN 202220951434 U
(71) Applicant: Eve Energy Co., Ltd., Huizhou, Guangdong 516006 (CN)
(72) Inventor: LIU, Liangliang, Huizhou, Guangdong 516006 (CN); ZHU, Yuan, Huizhou, Guangdong 516006 (CN); ZHAO, Ruirui, Huizhou, Guangdong 516006 (CN)
(74) Representative: Nederlandsch Octrooibureau
(86) International application number: PCT/CN2022/107226
(87) International publication number: WO 2023/201920

(57) **Abstract**

A battery shell and a battery. The battery shell comprises a body and two cover plates, wherein the body is of a cylindrical structure with two openings respective at two ends thereof, and is formed by means of bending a strip-shaped plate at least once; the two ends of the plate are connected to each other; the width of the plate is B 1, and the width of the cover plates is B2, B 1 being smaller than B2; the two cover plates respectively block the two openings of the body; the body is provided with a mounting side face; and a pole assembly is arranged on the mounting side face.

## Description

The present disclosure claims priority to Chinese Patent Application No. 202220951434.X, filed on April 22, 2022, which is incorporated herein by reference in its entirety.

### TECHNICAL FIELD

The present disclosure relates to the field of battery technologies, and in particular, to a battery shell and a battery with a battery shell.

### BACKGROUND

A battery shell is generally processed and shaped in a stamping manner, and to reduce raw material costs on the battery shell, stainless steel is usually selected as a material of the battery shell. However, tensile performance of the stainless steel is poor, and there is a great limitation on punching depth for the battery shell. With a complex shape of the battery shell, the stainless steel may cause increased difficulty on punching the battery shell. Therefore, a material with high tensile performance may be used to form the battery shell, but costs on forming the battery are greatly increased in turn.

### SUMMARY

The present disclosure provides a battery shell, which can reduce the processing and assembly difficulty.

The present disclosure provides a battery, which can increase space utilization and reduce manufacturing costs.

According to a first aspect, some embodiments provide a battery shell, including a body and two cover plates. The body is a cylinder structure with two openings respectively at two ends, the body is formed by bending a plate with a strip shape at least once, and two ends of the plate are connected to each other. A width of the plate is B 1, a width of the cover plate is B2, and B1 is less than B2. The two cover plates respectively block the two openings of the body. The body includes a mounting side surface, and a pole assembly is arranged on the mounting side surface.

According to a second aspect, some embodiments provide a battery, including a cell and the battery shell described above. The battery shell is provided with an accommodating cavity, and the cell is arranged in the accommodating cavity.

### BRIEF DESCRIPTION OF THE DRAWINGS

FIG. 1 is a schematic diagram of a battery shell according to Embodiment 1 of the present disclosure.
FIG. 2 is a schematic three-dimensional diagram of a battery shell according to Embodiment 1 of the present disclosure (a pole assembly is not shown).
FIG. 3 is a schematic diagram of a plate according to Embodiment 1 of the present disclosure.
FIG. 4 is a schematic cross-sectional view of a plate according to Embodiment 1 of the present disclosure.
FIG. 5 is a schematic cross-sectional view of a plate according to Embodiment 2 of the present disclosure.
FIG. 6 is a schematic diagram of a body according to Embodiment 1 of the present disclosure.
FIG. 7 is a schematic enlarged view of a position A in FIG. 6.
FIG. 8 is a partial schematic diagram of a body according to Embodiment 2 of the present disclosure.
FIG. 9 is a schematic diagram of a battery shell according to Embodiment 2 of the present disclosure (a pole assembly is not shown).
FIG. 10 is a schematic diagram of a battery shell according to Embodiment 3 of the present disclosure (a pole assembly is not shown).
FIG. 11 is a schematic diagram of a battery shell according to Embodiment 4 of the present disclosure (a pole assembly is not shown).
FIG. 12 is a schematic diagram of a battery shell according to Embodiment 5 of the present disclosure (a pole assembly is not shown).
FIG. 13 is a schematic exploded view of a body according to Embodiment 2 of the present disclosure.
FIG. 14 is a schematic diagram of a battery according to some embodiments of the present disclosure.

### reference numerals:

100. plate; 200. side plate;
1. body; 101. pole hole; 102. liquid injection hole; 103. groove; 104. reinforcing rib; 105. mounting groove; 106. first end; 107. second end; 108. insertion block; 109. fixing block; 2. cover plate; 3. pole assembly; 301. pole body; 302. insulating member; 4. cell; and 5. sealing member.

### DETAILED DESCRIPTION OF THE EMBODIMENTS

In the description of the present disclosure, unless otherwise explicitly specified and defined, terms such as "connection", "connected", and "fixed" should be understood in broad sense. For example, the connection may be a fixed connection, a detachable connection, or an integral connection; or the connection may be a mechanical connection or an electrical connection; or the connection may be a direct connection, an indirect connection through an intermediary, or internal communication between two components or a mutual action relationship between two elements. A person of ordinary skill in the art may understand specific meanings of the foregoing terms in the present disclosure according to a specific situation.

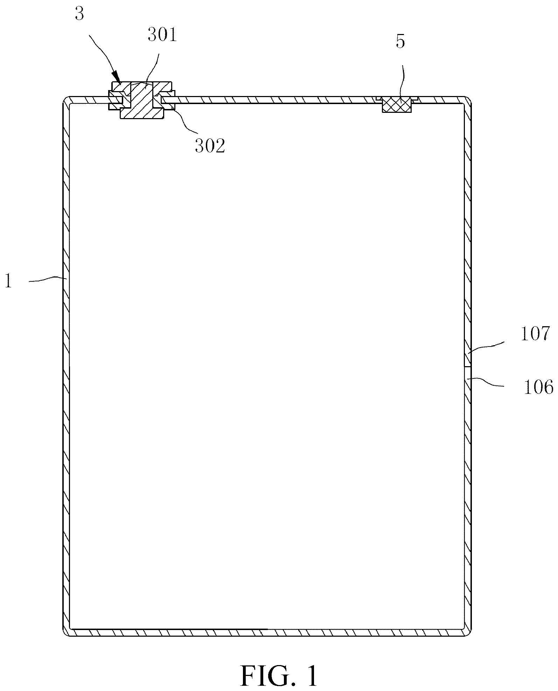

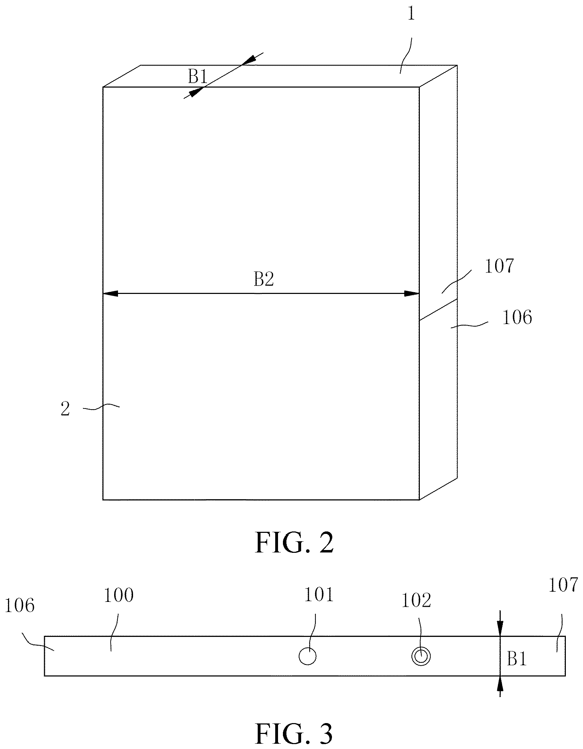

As shown in FIGs. 1 to 6, the present disclosure provides a battery shell, including a body 1 and two cover plates 2. The body 1 is a cylinder structure with two openings respectively at two ends. The body 1 is formed by bending a plate 100 with a strip shape at least once, and two ends of the plate 100 are connected to each other. A width of the plate 100 is B 1, a width of the cover plate 2 is B2, and B1 is less than B2. The two cover plates 2 respectively block the two openings of the body 1. In the present embodiment, a peripheral portion of the cover plate 2 is welded and connected to the body 1, the body 1 includes a mounting side surface, and a pole assembly 3 is arranged on the mounting side surface. The width of the plate 100 is provided less than the width of the cover plate 2, as such, the battery shell may appear as a short and flat structure, and a thickness of the battery shell is reduced. The body 1 and the cover plates 2 are arranged, and the battery shell is formed by splicing the body 1 and the cover plates 2, so that the processing difficulty on the battery shell may be reduced. The body 1 is formed by bending the plate 100, and the pole assembly 3 is arranged on the body 1, as such, a shape of a longitudinal section of the battery shell may be changed conveniently, and the battery may have more deformation possibilities in a longitudinal direction, thereby improving an application range.

In an embodiment, the ends of the plate 100 are welded. In a case that the plate 100 is bent once, a cross-section of the body 1 may be a circle. In a case that the plate 100 is bent twice, the cross-section of the body 1 may be a triangle or a semi-circle. In a case that the plate 100 is bent three times, the cross-section of the body 1 may be a quadrangle.

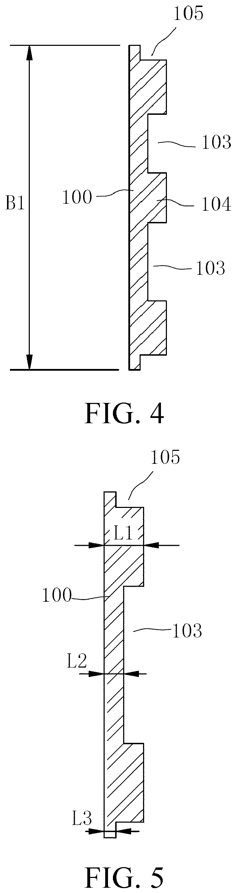

Referring to FIG. 4 and FIG. 5, an inner side surface of the body 1 is provided with a groove 103. In the present embodiment, a length of the groove 103 extends along a length side of the plate 100. The groove 103 may be shaped on the plate 100, and the plate 100 is then bent. By providing the groove 103, space of an accommodating cavity in the body 1 may be increased, which helps accommodate components in a battery such as a cell 4. By providing the groove 103 in such arrangement, a partial thickness of the plate 100 may be further thinned, which may reduce the difficulty on bending the plate 100.

In the present embodiment, two grooves 103 are provided, and the adjacent grooves 103 are spaced along a width side of the plate 100. In this case, a reinforcing rib 104 is provided between the adjacent grooves 103. The thickness of the plate 100 may be partially thinned by increasing the number of the grooves 103. The adjacent grooves 103 are spaced to define a reinforcing rib 104 therebetween, to improve a support strength of the body 1, to ensure the shape of the bent body 1 normalized as whole, and to reduce deformation of the body 1. In other embodiments, three or even more grooves 103 may alternatively be provided, and the number of the grooves 103 may be selected based on an actual requirement, which is not limited in the present embodiment.

In the present embodiment, the thickness L1 of the plate 100 ranges from 0.25 mm to 0.3 mm, and a distance L2 between an outer side surface of the body 1 and a groove bottom of the groove 103 ranges from 0.15 mm to 0.2 mm. A thickness of a bending region of the plate 100 is limited, so that the plate 100 may be prevented from being broken in a bending process while the bending difficulty is reduced, thereby improving a yield rate.

In an embodiment, a mounting groove 105 is provided on a side surface of the body 1 close to the cover plate 2 in a recessed manner, and the cover plate 2 is embedded in the mounting groove 105. By providing the arrangement of the mounting groove 105, the cover plate 2 and the body 1 may be expediently positioned and assembled, which helps the welding between the cover plate 2 and the body 1, thereby ensuring the welding quality between the cover plate 2 and the body 1.

In the present embodiment, a distance L3 between a groove wall of the mounting groove 105 and the outer side surface of the body 1 ranges from 0.05 mm to 0.1 mm.

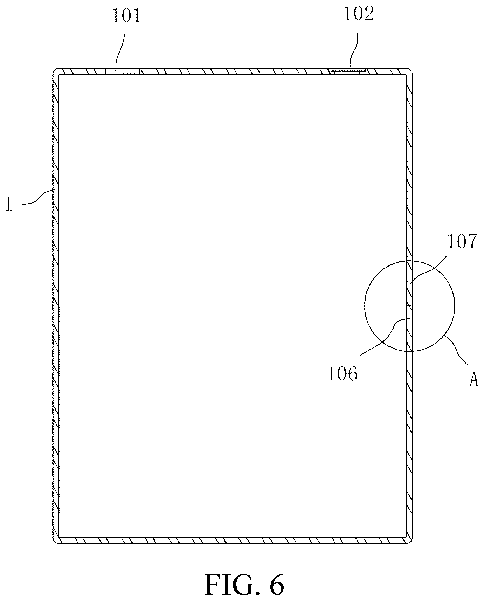

Referring to FIG. 6, a pole hole 101 is provided on the plate 100. After the plate 100 is shaped through bending, the pole hole 101 is located on the mounting side surface, wherein the pole hole 101 is used for mounting the pole assembly 3. Punching is first performed on the plate 100, then the plate 100 is bent, and the pole assembly 3 is finally mounted. In this way, the processing difficulty of the pole hole 101 may be reduced, which helps reduce manufacturing costs on the battery shell.

A liquid injection hole 102 is further provided on the mounting side surface of the body 1 in the present embodiment, and an electrolyte is injected into the accommodating cavity of the battery shell through the liquid injection hole 102. After the electrolyte is injected, a sealing member 5 may be used to seal the liquid injection hole 102. Prior to bending the plate 100, the liquid injection hole 102 may be first punched on the plate 100. That is, the liquid injection hole 102 and the pole hole 101 are first punched on the plate 100, and the plate 100 is then bent. In this way, the processing difficulty of the body 1 may be reduced to the greatest extent, and manufacturing costs on the battery may be reduced.

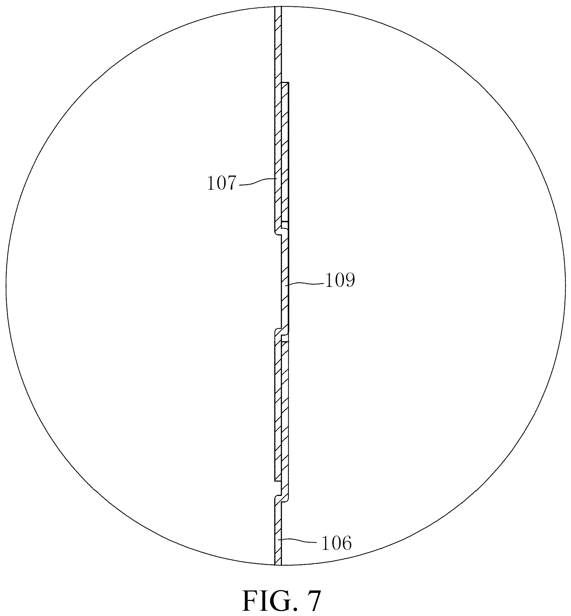

In an embodiment, the plate 100 includes a first end 106 and a second end 107 that are welded and connected to each other. Referring to FIG. 6 and FIG. 7, in an embodiment, the first end 106 and the second end 107 of the plate 100 are overlapped and connected. By providing the arrangement of the first end 106 and the second end 107, the ends of the plate 100 may be partially overlapped. In this way, the welding difficulty of the plate 100 may be reduced, which helps improve the welding quality of the body 1 and improve the sealing performance of the battery shell. A thickness of the first end 106 and a thickness of the second end 107 are set to be less than the thickness of the plate 100, so that a thickness of a welding region of the body 1 may be thinned, which helps improve the appearance of the battery shell.

In the present embodiment, a through hole is provided on the first end 106, a fixing block 109 is arranged on a side surface of the second end 107 close to the first end 106 in a protruding manner, and the fixing block 109 is inserted into the through hole. Through arrangement of the through hole and the fixing block 109, before welding is performed, the first end 106 and the second end 107 may be first inserted and positioned. In this way, the welding difficulty may be reduced, which helps improve the welding quality.

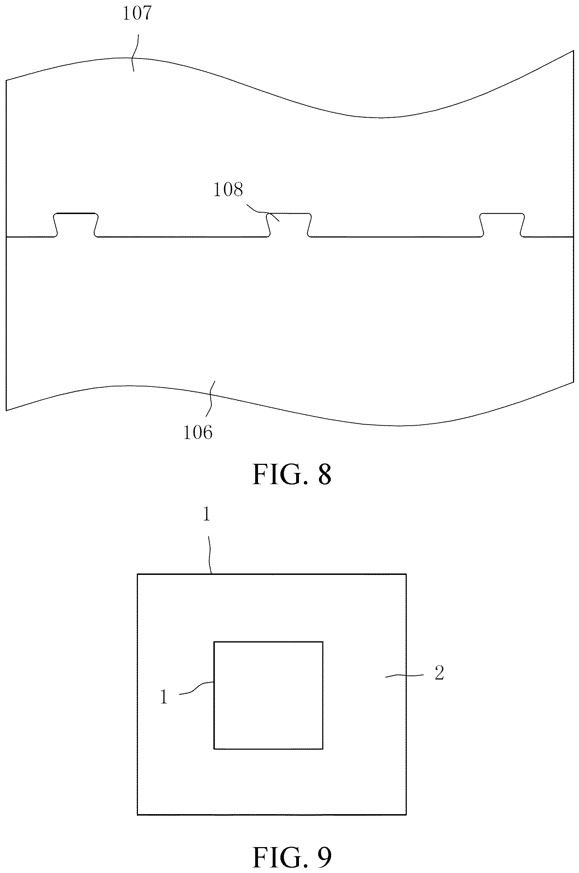

Referring to FIG. 8, in an embodiment, the first end 106 of the plate 100 is provided with an insertion groove, the second end 107 is provided with an insertion block 108, and a shape of the insertion block 108 is same as a shape of the insertion groove. As the first end 106 is in contact with the second end 107, the insertion block 108 is inserted into the insertion groove. Insertion between the insertion groove and the insertion block 108 may also implement positioning of the plate 100 before welding, and the welding difficulty may be reduced in this way. In the present embodiment, a size of an opening of the insertion groove is less than a size of a bottom of the insertion groove. As such, with the insertion block 108 being inserted into the insertion groove, the insertion block 108 cannot be separated from the insertion groove along a depth side of the insertion groove under a limitation of the opening of the insertion groove. In this way, effects of the insertion and the positioning between the insertion block 108 and the insertion groove may be improved, and the shaping quality of the body 1 may be therefore improved.

In an embodiment, a position at which the first end 106 and the second end 107 of the plate 100 are connected is located on a side surface of the body 1. In this way, the welding difficulty may be reduced. In a case that the body 1 is in a shape of a quadrangle, the plate 100 needs to be bent four times. In other embodiments, the position at which the first end 106 and the second end 107 of the plate 100 are connected may be arranged at a corner of the body 1. In this way, when the body 1 is in a shape of a quadrangle, the plate 100 only needs to be bent three times, and the bending times of the plate 100 is reduced.

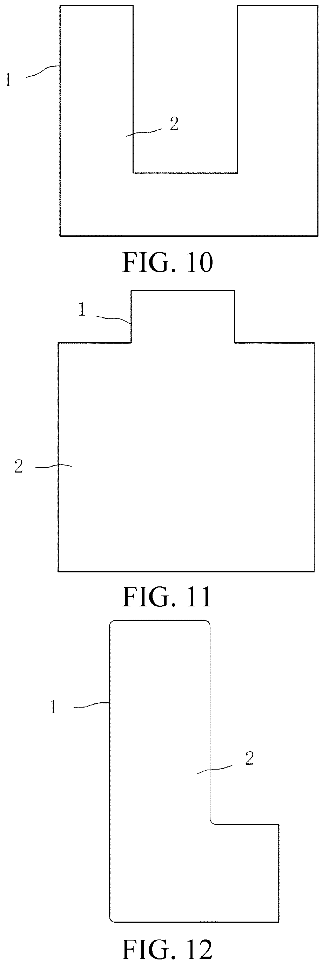

Referring to FIGs. 9 to 12, the body 1 is formed by bending the plate 100. Therefore, the bending can be performed by changing the bending times to form the body 1 in different shapes. As such, the battery shell may have different shapes. Referring to FIG. 9, in a case that an annular battery shell needs to be provided, two bodies 1 with different sizes may be spliced. In this case, the cover plate 2 is annular. After the bodies 1 and the cover plate 2 are spliced, a battery shell with a hole structure at a center may be formed.

In an embodiment, punching processing may be performed on the cover plate 2, so that the battery may be also deformed in a transverse direction, thereby further improving the application range of the battery shell.

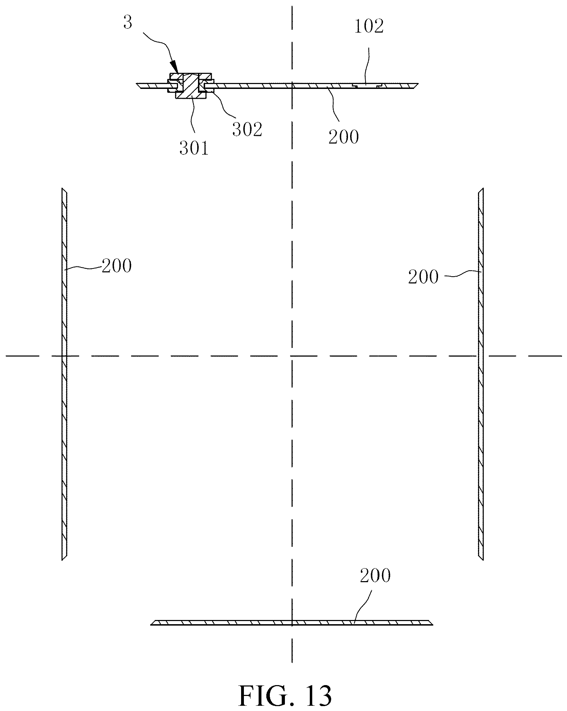

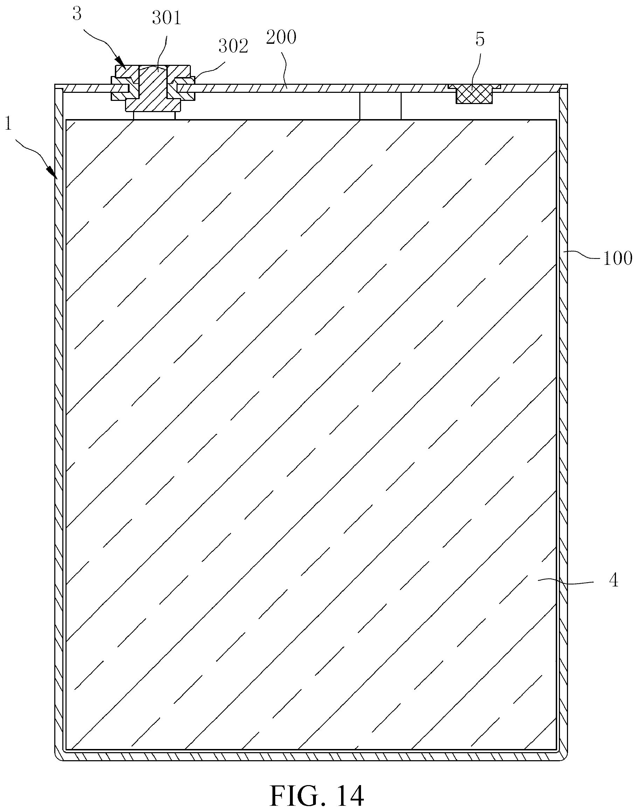

In an embodiment, the body 1 may alternatively be formed through splicing. In a case that the body 1 is in a shape of a quadrangle, referring to FIG. 13, the body 1 may be shaped by splicing four side plates 200. Referring to FIG. 14, the plate 100 may alternatively be bent to form a U-shaped structure, in this case, the plate 100 is bent twice, and the body 1 is shaped by splicing the plate 100 and one side plate 200. Alternatively, the plate 100 may be bent to form an L-shaped structure, in this case, the plate 100 only needs to be bent once, and the body 1 is then shaped by splicing two L-shaped plates 100.

Referring to FIG. 14, the present embodiment further provides a battery, including the battery shell described above. Because the battery shell has more deformation possibilities in the longitudinal direction, a battery with the battery shell has high space utilization and wide application range. The processing difficulty on the battery shell is low, so that the battery made with the battery shell has low costs and is suitable for scaled production.

The battery of the present embodiment further includes a cell 4, and the cell 4 is arranged in the accommodating cavity of the battery shell. The pole assembly 3 includes a pole body 301 and an insulating member 302, wherein the pole body 301 is arranged in the pole hole 101, and the insulating member 302 is arranged between the body 1 and the pole body 301. The insulating member 302 may isolate the body 1 from the pole body 301 for insulating, and the insulating member 302 may further block a gap between the pole body 301 and the pole hole 101 to play a sealing function. Two electrodes of the cell 4 are respectively electrically connected to the pole body 301 and the body 1, so that the pole body 301 and the battery 1 respectively serve as a positive electrode and a negative electrode of the battery.

In the description of the present disclosure, it should be understood that orientation or position relationships indicated by the terms such as "upper", "lower", "left", and "right" are based on orientation or position relationships shown in the accompanying drawings, and are used only for ease and brevity of illustration and description of the present disclosure, rather than indicating or implying that the mentioned apparatus or component needs to have a particular orientation or needs to be constructed and operated in a particular orientation. Therefore, such terms should not be construed as a limitation on the present disclosure. In addition, the terms "first" and "second" are only used for the description and do not have specific meanings.

In the description of this specification, description of reference terms such as "an embodiment" and "an example" means that a specific feature, structure, material, or characteristic that is described with reference to the embodiment or the example is included in at least one embodiment or example of the present disclosure. In this specification, schematic description of the foregoing terms does not necessarily indicate the same embodiment or example.

In addition, it should be understood that, although this specification is described according to implementations, not each implementation includes only a separate technical solution. The specification is described in such a manner only for the sake of clarity. A person skilled in the art should take the specification as a whole, and the technical solutions in various embodiments may also be appropriately combined to form other implementations that can be understood by the person skilled in the art.

## Claims

1. A battery shell, comprising a body and two cover plates, wherein the body is a cylinder structure with two openings respectively at two ends, the body is formed by bending a plate with a strip shape at least once, and two ends of the plate are connected; wherein a width of the plate is B1, a width of the cover plate is B2, and B1 is less than B2; wherein the two cover plates respectively block the two openings of the body, the body comprises a mounting side surface, and a pole assembly is arranged on the mounting side surface.

2. The battery shell of claim 1, wherein an inner side surface of the body is provided with a groove, and a length of the groove extends along a length side of the plate.

3. The battery shell of claim 2, wherein a plurality of grooves is provided, and adjacent grooves are spaced along a width side of the plate.

4. The battery shell of claim 1, wherein a pole hole is provided on the plate, and the pole hole is configured for mounting the pole assembly.

5. The battery shell of claim 1, wherein a mounting groove is provided on a side surface of the body close to the cover plate in a recessed manner, and the cover plate is embedded in the mounting groove.

6. The battery shell of claim 1, wherein the plate comprises a first end and a second end, and the first end is connected and welded to the second end.

7. The battery shell of claim 6, wherein a through hole is provided on the first end, a fixing block is arranged on a side surface of the second end close to the first end in a protruding manner, and the fixing block is inserted into the through hole.

8. The battery shell of claim 1, wherein the plate comprises a first end and a second end welded and connected to each other, the first end is provided with an insertion groove, the second end is provided with an insertion block, a shape of the insertion block is same as a shape of the insertion groove, and the insertion block is inserted into the insertion groove.

9. The battery shell of claim 1, wherein the plate comprises a first end and a second end, the first end is welded to the second end, and a position for connecting the first end and the second end is located on a side surface of the body; or a position for welding the first end and the second end is located at a corner of the body.

10. A battery, comprising a cell and the battery shell of claim 1, wherein the battery shell is provided with an accommodating cavity, and the cell is arranged in the accommodating cavity.

11. The battery shell of claim 10, wherein an inner side surface of the body is provided with a groove, and a length of the groove extends along a length side of the plate.

12. The battery shell of claim 11, wherein a plurality of grooves is provided, and adjacent grooves are spaced along a width side of the plate.

13. The battery shell of claim 10, wherein a pole hole is provided on the plate, and the pole hole is configured for mounting the pole assembly.

14. The battery shell of claim 10, wherein a mounting groove is provided on a side surface of the body close to the cover plate in a recessed manner, and the cover plate is embedded in the mounting groove.

15. The battery shell of claim 10, wherein the plate comprises a first end and a second end, and the first end is connected and welded to the second end.

16. The battery shell of claim 15, wherein a through hole is provided on the first end, a fixing block is arranged on a side surface of the second end close to the first end in a protruding manner, and the fixing block is inserted into the through hole.

17. The battery shell of claim 10, wherein the plate comprises a first end and a second end welded and connected to each other, the first end is provided with an insertion groove, the second end is provided with an insertion block, a shape of the insertion block is same as a shape of the insertion groove, and the insertion block is inserted into the insertion groove.

18. The battery shell of claim 10, wherein the plate comprises a first end and a second end, the first end is welded to the second end, and a position for connecting the first end and the second end is located on a side surface of the body; or a position for welding the first end and the second end is located at a corner of the body.
